# DEMANDE DE BREVET EUROPEEN

(11) **EP 1 610 155 A1**
(43) Date de publication de la demande: **28.12.2005**
(21) Numéro de dépôt: 05291337.3
(22) Date de dépôt: 22.06.2005
(51) Int. Cl.: G01V 8/10

(54) **Système de détection d`articles sur un tapis convoyeur.**

(30) Priorité: 23.06.2004 FR 0406836
(71) Demandeur: HMY INVESTISSEMENTS (SA), 89470 Moneteau (FR)
(72) Inventeur: Hervieux, Philippe, 41100 Vendome (FR)
(74) Mandataire: Honoré, Anne-Claire

(57) **Abrégé**

L'invention concerne un système de détection (1) d'articles (3, 12) sur un tapis convoyeur (8, 16) d'une installation (2) pour la comptabilisation des articles achetés dans un magasin, ladite installation (2) comportant au moins un module frontal (4) servant à disposer les articles à comptabiliser (3), un système de lecture (5) de type scanner afin de comptabiliser lesdits articles (3) et optionnellement un module arrière (14) pour stocker les articles comptabilisés (12), une main courante (20, 23) étant disposée le long de chaque côté longitudinal dudit tapis convoyeur (8, 16) et rendue amovible de sorte qu'aucun corps ne puisse être introduit entre le brin supérieur (9, 17) dudit tapis convoyeur (8, 16) et lesdites mains courantes (20, 23) et des moyens de détection (21, 22) disposés au niveau d'une extrémité d'entrée (15) ou de sortie (7) dudit tapis convoyeur (8, 16), remarquable en ce que lesdits moyens de détection (21, 22) sont intégrés à l'intérieur desdites mains courantes (20, 23), ladite détection s'effectuant au travers de la matière formant paroi desdites mains courantes (20, 23).

## Description

La présente invention concerne un système de détection d'articles sur le tapis convoyeur d'une installation pour la comptabilisation des articles achetés dans un magasin.

A l'heure actuelle, tous les supermarchés et plus généralement toutes les grandes surfaces disposent d'installations pour la comptabilisation des articles achetés dans ces surfaces. Ces installations, du type caisse de paiement, sont des lieux où un client présente les articles qu'il a l'intention d'acheter ; un caissier scanne ou entre à la main le prix des articles, le client paie la somme due, les articles sont mis en sacs et ces sacs sont placés dans un chariot ou portés à la main par le client. Usuellement, plusieurs de ces installations sont disposées le long d'une ligne formant la sortie du magasin, ce qui permet d'une part d'écourter l'attente du client aux caisses de paiement et d'autre part de permettre le passage simultané de plusieurs clients.

Classiquement, une installation pour la comptabilisation d'articles comporte un module frontal sur lequel le client dépose ses articles sur un tapis convoyeur qui permet de transporter ces articles en attente de comptabilisation jusqu'à un scanner et une caisse enregistreuse situés en aval du module frontal. Le caissier saisit chacun des articles au niveau de l'extrémité de sortie du tapis convoyeur, scanne les données relatives à l'article saisi ou entre ces données à la main à l'aide d'un clavier relié à la caisse enregistreuse.

Par ailleurs, certaines installations sont munies d'un second tapis convoyeur en aval du scanner de la caisse, ce second tapis convoyeur étant partie intégrante de ce qu'il est couramment appelé module arrière. Le caissier dépose les articles comptabilisés à l'entrée de ce second tapis convoyeur qui les transporte jusqu'à son extrémité de sortie où les articles comptabilisés peuvent être mis en sac.

Le tapis convoyeur du module frontal est actionné par un moteur qui fonctionne notamment avec une cellule identifiant ou non la présence d'un article dans son champ d'action. Cette cellule, et plus généralement ces moyens de détection sont disposés à l'extrémité de sortie du premier tapis convoyeur pour le module frontal et optionnellement à l'extrémité d'entrée du second tapis convoyeur. Les moyens de détection consistent la plupart du temps en une source de lumière coopérant avec un ensemble de photodiodes ou de phototransistors.

Dans le cas du tapis convoyeur du module frontal, lorsqu'un article atteint l'extrémité de sortie de ce convoyeur, cet article interrompt le faisceau de lumière mis en oeuvre par les moyens de détection et le faisceau n'atteint plus l'ensemble récepteur. Un circuit couplant le récepteur au moteur d'entraînement du tapis, en réponse à l'absence de lumière au niveau de l'ensemble récepteur stoppe le moteur afin d'éviter que les articles ne soient poussés au-delà de l'extrémité de sortie de ce convoyeur. Alternativement, le caissier peut actionner le moteur à l'aide d'une pédale prévue à cet effet afin de contrôler à son gré le mouvement d'avance des articles présents sur le convoyeur.

En outre, le module frontal comporte dans sa partie supérieure deux mains courantes fixes disposées le long de chaque côté longitudinal du tapis convoyeur afin, en premier lieu, de former des butées latérales aux articles dans le cas d'une marche forcée du convoyeur et d'une accumulation excessive d'articles, et ensuite, de garantir qu'aucun corps, matériel ou corporel, ne puisse être introduit entre la main courante et le tapis convoyeur lors de son avancement. En particulier, il est impossible aux enfants d'introduire les doigts à la jonction entre le tapis convoyeur et la main courante de sorte qu'ils ne peuvent en aucun cas être blessés. Les mains courantes sont communément réalisées en métal par filage ou en plastique par extrusion.

Dans tous les systèmes de détection d'articles sur le tapis convoyeur d'une installation pour la comptabilisation des articles achetés dans un magasin, les moyens de détection précédemment cités sont rapportés aux mains courantes, couramment visés ou collés sur ces dernières. Les mains courantes possédant souvent chacune une face globalement verticale s'étendant au dessus du niveau du brin supérieur du tapis convoyeur du module frontal afin de former des butées latérales, les moyens de détection sont alors rapportés sur ces faces. Une autre variante peut consister à insérer les moyens de détection à l'intérieur des mains courantes, le faisceau lumineux passant alors au travers de lumières réalisées dans les mains courantes.

Dans les deux cas de figures précédents, les moyens de détection mis en oeuvre sont souvent endommagés par des chocs, salis ou rayés par des articles disposés sur le tapis convoyeur ou par des personnes peu précautionneuses.

Ceci constitue un inconvénient majeur, car cela diminue d'autant leur durée de vie et engendre des frais de maintenance importants. De plus, les modes précédents de réalisation de systèmes de détection sont particulièrement inesthétiques car la continuité des mains courantes est rompue par la formation de parties saillantes ou de découpes.

La présente invention vise à pallier ces inconvénients en proposant un système de détection d'articles sur le tapis convoyeur d'une installation du type caisse de paiement où les moyens de détection ne peuvent être directement mis en contact avec un corps extérieur qu'il s'agisse d'une personne, d'un client ou un article à comptabiliser afin de prévenir tout risque d'endommagement par chocs, salissures ou rayures.

A cet effet, et conformément à l'invention, il est proposé un système de détection d'articles sur un tapis convoyeur d'une installation pour la comptabilisation des articles achetés dans un magasin, ladite installation comportant au moins un module frontal servant à disposer les articles à comptabiliser, un système de lecture de type scanner afin de comptabiliser lesdits articles et optionnellement un module arrière pour stocker les articles comptabilisés, une main courante étant disposée le long de chaque côté longitudinal dudit tapis convoyeur et rendue immobile de sorte qu'aucun corps ne puisse être introduit entre le brin supérieur dudit tapis convoyeur et lesdites mains courantes, et des moyens de détection disposés au niveau d'une extrémité d'entrée ou de sortie dudit tapis convoyeur, remarquable en ce que lesdits moyens de détection sont intégrés à l'intérieur desdites mains courantes, ladite détection s'effectuant au travers de la matière formant paroi desdites mains courantes.

On s'aperçoit bien que, contrairement aux dispositifs déjà connus, l'invention permet avantageusement de s'assurer qu'aucun article ne peut venir heurter ou frotter sur les moyens de détection qu'elle met en oeuvre, de même que les clients, précautionneux ou non, sont dans l'impossibilité de tout contact avec les moyens de détection, de sorte que ces derniers ne peuvent être salis ou rayés.

Par ailleurs, l'encastrement des moyens de détection à l'intérieur des mains courantes, jumelé au fait que la détection s'opère au travers de leurs parois permet aux mains courantes d'offrir une esthétique améliorée face aux dispositions déjà connues.

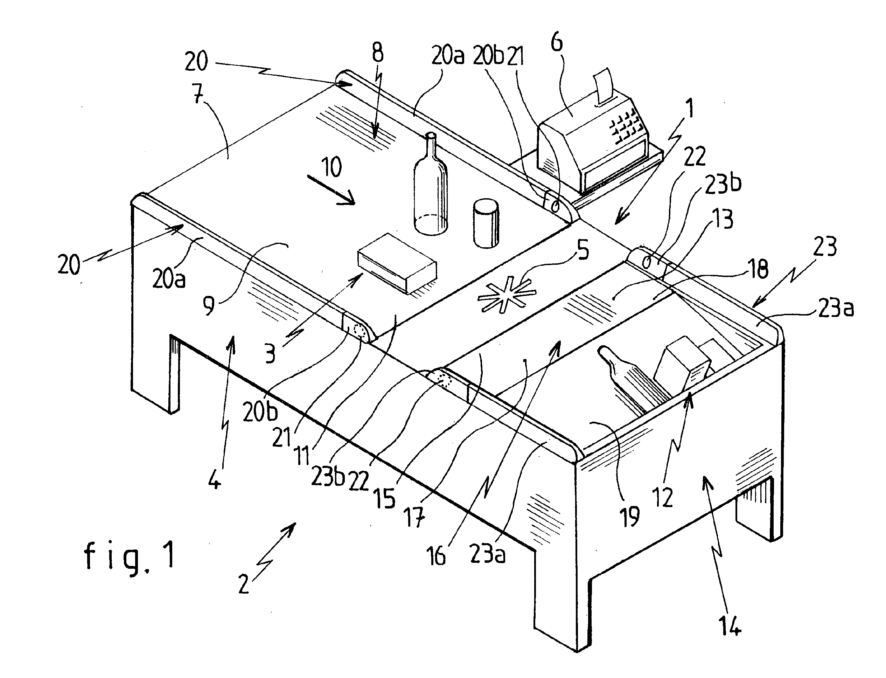

D'autres caractéristiques et avantages de la présente invention ressortiront mieux de la description qui va suivre d'une réalisation particulière de système de détection d'articles sur le tapis convoyeur d'une installation du type caisse de paiement conforme à l'invention, donnée à titre d'exemple non limitatif en référence à la figure unique qui est annexée et qui représente une vue en perspective d'une installation pour la comptabilisation des articles achetés dans un magasin conforme à l'invention.

En référence à la figure unique, le système de détection 1 d'articles sur un tapis est intégré à une installation 2 pour la comptabilisation d'articles 3 achetés dans un magasin, du type grandes surfaces, par exemple, comportant un module frontal 4 sur lequel le client dépose ses articles à comptabiliser 3 lorsque celui-ci se présente à l'installation 2. Plus précisément, les articles 3, munis d'un code barres pouvant être lu par un système de lecture numérique 5 du type scanner, associé à une caisse enregistreuse 6, sont déposés à une extrémité d'entrée 7 d'un premier tapis convoyeur 8 sur le brin supérieur 9. Le tapis convoyeur 8 s'étend jusqu'au système de lecture numérique 5 de sorte à former la partie supérieure du module frontal 4. Compte tenu que le brin supérieur 9 du tapis convoyeur 8 se déplace de l'extrémité d'entrée 7 dudit tapis convoyeur 8 vers le système de lecture 5 suivant la flèche 10, les articles à comptabiliser 3 sont transportés vers une extrémité de sortie 11 du tapis convoyeur 8 de manière à ce qu'un préposé à la caisse 6 puisse les saisir un à un et effectuer la lecture des codes barres qui leurs sont associés par un simple passage devant le système de lecture 5.

Les articles comptabilisés 12 sont alors déposés par le préposé à la caisse 6 sur la partie supérieure 13 d'un module arrière 14 destiné à stocker lesdits articles 12 jusqu'à ce que le client ne les mette en sacs de manière à les transporter plus facilement en dehors du magasin ou de la grande surface, notamment supermarché ou hypermarché. Plus précisément, les articles comptabilisés 12 sont déposés à l'extrémité d'entrée 15 d'un second tapis convoyeur 16, sur son brin supérieur 17. Le tapis convoyeur 16 s'étend horizontalement, le brin supérieur 17 se déplaçant jusqu'à une extrémité de sortie 18 où un réceptacle 19 peut être aménagé de manière à recevoir et stocker les articles comptabilisés 12 en attente de mise en sac et/ou d'évacuation par le client.

En référence à la figure unique, une main courante 20 est disposée le long de chaque côté longitudinal du tapis convoyeur 8 et rendue amovible. Les mains courantes 20 sont conçues et réalisées de telle manière qu'aucun corps, matériel ou corporel, ne peut être introduit entre lesdites mains courantes 20 et le brin supérieur 9 du tapis convoyeur 8.

Par ailleurs, des moyens de détection 21 sont insérés à l'intérieur des mains courantes 20 au niveau de l'extrémité de sortie 11 du premier tapis convoyeur 8 de manière à procurer le système de détection 1 d'articles sur un tapis convoyeur conforme à l'invention. Les moyens de détection 21 sont liés au circuit de commande d'un moteur qui permet le déplacement du brin supérieur 9 du tapis convoyeur 8. Ainsi, la présence d'un article à comptabiliser 3 à l'extrémité de sortie 11 du tapis convoyeur 8 coupe le moteur, stoppant le déplacement du brin supérieur 9, ce qui permet d'éviter que les articles 3 ne soient poussés par le tapis convoyeur 8 au-delà de l'extrémité de sortie 11 et prévenir leur possible chute sur les côtés latéraux du module frontal 4 dans l'hypothèse où d'autres articles 3 seraient déjà présents au niveau du système de lecture 5.

Selon une caractéristique principale, la détection est réalisée au travers de la matière des mains courantes 20 qui sont chacune constituées à cet effet de deux portions 20a et 20b : un corps principal 20a en acier galvanisé, en métal ou en plastique du type PVC, obtenu par filage, et un embout de finition 20b obtenu par injection dans un moule d'une matière plastique perméable à une onde lumineuse appartenant aux rayonnements invisibles de basses fréquences et imperméable à une onde lumineuse appartenant aux rayonnements visibles.

Selon une autre caractéristique de l'invention, les moyens de détection mis en oeuvre par le système de détection conforme à l'invention, consistent en des moyens de détection photoélectriques procurant un faisceau de lumière dont la fréquence est inférieure ou égale aux fréquences du domaine des infrarouges. En effet, un faisceau de ce type permet avantageusement de rendre insensibles les moyens de détection 21 à la lumière ambiante qui peut être particulièrement importante et variable dans ce type de magasin. Les deux constituants sont une cellule émettrice et une cellule réceptrice. La détection est effective quand l'article 3 pénètre dans le faisceau lumineux émis par la cellule émettrice et modifie suffisamment la quantité de lumière reçue par la cellule réceptrice pour provoquer un changement d'état logique au niveau de la commande électrique du moteur. Les détecteurs photoélectriques ont un émetteur à diodes électroluminescentes et un récepteur à phototransistors. Ces constituants électroniques sont utilisés pour leur grand rendement lumineux, leur insensibilité aux chocs et aux vibrations, leur durée de vie pratiquement illimitée et leur rapidité de réponse. L'émission se faisant à une fréquence inférieure ou égale aux fréquences du domaine des infrarouges, les cellules sont insérées à l'intérieur des portions 20b des mains courantes 20 réalisées en une matière telle que le faisceau émis puisse passer au travers de la paroi desdites mains courantes 20.

Selon un mode de réalisation particulier, la cellule émettrice et la cellule réceptrice sont disposées dans des boîtiers séparés. A l'exception des objets transparents qui ne bloquent pas le faisceau lumineux, les moyens de détection peuvent détecter des objets de toute nature (opaques, réfléchissants...), ceci avec une excellente précision. La cellule émettrice est alors intégrée à l'un des embouts de finition 20b et la cellule réceptrice est alors intégrée à l'autre embout de finition 20b.

Néanmoins, d'autres modes de réalisation pourraient être envisagés, connus de l'Homme du métier, du type réflexe (la cellule émettrice et la cellule réceptrice sont regroupés dans un même boîtier inséré dans l'un des embouts de finition 20b, le faisceau étant réfléchi sur un réflecteur inséré dans l'autre embout de finition 20b), sans sortir du cadre de l'invention.

Enfin, un système de détection 1 d'articles sur un tapis convoyeur conforme à l'invention peut également équiper le module arrière 14 de l'installation 2. Le moteur du tapis convoyeur 16 est alors commandé par des moyens de détection 22 tels que précédemment décrits, insérés au niveau de l'extrémité d'entrée 15 dudit tapis convoyeur 16 dans des mains courantes 23 disposées le long dudit tapis convoyeur 16. Chaque main courante 23 est composée d'un corps principal 23a de même matière que la portion 20a de la main courante 20 et d'un embout de finition 23b de matière identique à celle de l'embout de finition 20b de la main courante 20. Inversement au fonctionnement précédemment décrit, la présence détectée d'un objet entraîne la mise en mouvement du brin supérieur 17 du tapis convoyeur 16 par actionnement du moteur afin d'en permettre l'évacuation.

Bien entendu, diverses modifications peuvent être apportés par l'Homme du métier au système de détection 1 qui vient d'être décrit uniquement à titre d'exemple non limitatif sans sortir du cadre de l'invention.

## Revendications

1. Système de détection (1) d'articles (3, 12) sur un tapis convoyeur (8, 16) d'une installation (2) pour la comptabilisation des articles achetés dans un magasin, ladite installation (2) comportant au moins un module frontal (4) servant à disposer les articles à comptabiliser (3), un système de lecture (5) de type scanner afin de comptabiliser lesdits articles (3) et optionnellement un module arrière (14) pour stocker lesdits articles comptabilisés (12), une main courante (20, 23) étant disposée le long de chaque côté longitudinal dudit tapis convoyeur (8, 16) et rendue amovible de sorte qu'aucun corps ne puisse être introduit entre le brin supérieur (9, 17) dudit tapis convoyeur (8, 16) et lesdites mains courantes (20, 23), et des moyens de détection (21, 22) disposés au niveau d'une extrémité d'entrée (15) ou de sortie (7) dudit tapis convoyeur (8, 16), **caractérisé en ce que** lesdits moyens de détection (21, 22) sont intégrés à l'intérieur desdites mains courantes (20, 23), ladite détection s'effectuant au travers de la matière formant paroi desdites mains courantes (20, 23).

2. Système de détection (1) selon la revendication principale **caractérisé en ce que** chaque main courante (20, 23) consiste en un corps principal rectiligne (20a, 23a) et en un embout de finition (20b, 23b) disposé à l'extrémité d'entrée (16) ou de sortie (7) du tapis convoyeur (8, 16), chaque embout de finition (20b, 23b) étant obtenu par injection dans un moule d'une matière plastique perméable à une onde lumineuse appartenant aux rayonnements invisibles de basses fréquences et imperméable à une onde lumineuse appartenant aux rayonnements visibles, les moyens de détection (21, 22) étant disposés à l'intérieur desdits embouts de finition (20b, 23b).

3. Système de détection (1) selon la revendication 2 **caractérisé en ce que** les moyens de détection (21, 27) sont du type détecteurs photoélectriques.

4. Système de détection (1) selon la revendication précédente **caractérisé en ce que** les moyens de détection (21, 22) mettent en oeuvre un faisceau lumineux dont l'onde possède une fréquence inférieure ou égale aux fréquences du domaine des infrarouges.

5. Système de détection (1) selon la revendication précédente, **caractérisé en ce que** les moyens de détection (21, 22) consistent en une cellule émettrice et une cellule réceptrice, ladite cellule émettrice étant intégrée à l'un des embouts de finition (20b, 23b) et ladite cellule réceptrice étant intégrée à l'autre desdits embouts de finition (20b, 23b).

6. Système de détection (1) selon la revendication précédente, **caractérisé en ce que** la cellule émettrice est du type à diodes électroluminescentes et **en ce que** la cellule réceptrice est de type phototransistors.
